# EUROPEAN PATENT SPECIFICATION

(11) **EP 4 405 074 B1**
(45) Date of publication and mention of the grant of the patent: **05.11.2025**
(21) Application number: 22782674.0
(22) Date of filing: 08.09.2022
(51) Int. Cl.: B01D 17/02, B01D 17/12, B04B 1/04

(54) **SEPARATION OF OIL-CONTAINING AQUEOUS LIQUID MIXTURE**
TRENNUNG EINES ÖLHALTIGEN WÄSSRIGEN FLÜSSIGKEITSGEMISCHES
SÉPARATION D'UN MÉLANGE LIQUIDE AQUEUX CONTENANT DE L'HUILE

(30) Priority: 21.09.2021 EP 21198062
(43) Date of publication of application: 31.07.2024
(73) Proprietor: Alfa Laval Corporate AB, 221 00 Lund (SE)
(72) Inventor: BORGSTRÖM, Leonard, 135 42 TYRESÖ (SE)
(74) Representative: Alfa Laval Attorneys
(86) International application number: PCT/EP2022/074972
(87) International publication number: WO 2023/046493

(56) References cited:
- US-A1- 2013 029 828
- US-A1- 2016 339 452
- US-A1- 2018 117 601
- US-A1- 2019 192 996
- US-B2- 7 635 328

## Description

### TECHNICAL FIELD

The invention relates to a method for separating an oil-containing aqueous liquid mixture.

### BACKGROUND

Separation of an oil-containing aqueous liquid mixture into an aqueous heavy phase and an oil-containing light phase may be performed in a high-speed centrifugal separator. If the oil-containing aqueous liquid mixture has a low oil content and moreover, if the oil content varies over time, this may pose particular problems in the separation of light and heavy phases.

This may be the case e.g., in the separation of so-called bilgewater aboard a ship. A very low remaining oil content is a requirement of the separated aqueous heavy phase in order for it to be disposed of overboard of the ship. On the other hand, large amounts of water separated with the light phase is to be avoided in order to minimise production of slop liquid and cost for disposal thereof.

US 2016/0339452 discloses an example of separating an oil-containing aqueous liquid mixture wherein the light phase is measured in order to automatically regulate the flow through the separator. US 7635328 discloses an example of separating an oil-containing aqueous liquid mixture in which no return conduit is shown for recirculation of the light phase.

### SUMMARY

It would be advantageous to separate a low oil content aqueous liquid mixture into a heavy phase and a light phase and be able to handle variations in the oil content of the oil-containing aqueous liquid mixture.

In particular, it would be desirable to handle operating conditions when a separated light phase also contains a large portion of the aqueous heavy phase portion of the liquid mixture.

To better address one or more of these concerns, a method having the features defined in the claims is provided.

According to an aspect of the invention, there is provided a method for continuously separating an oil-containing aqueous liquid mixture as defined in claim 1.

According to a further aspect, not part of the invention, there is provided a separation system configured for continuously separating an oil-containing aqueous liquid mixture having an oil content of ≤ 5% into an aqueous heavy phase and a light phase. The separation system comprises a tank for the oil-containing aqueous liquid mixture, a centrifugal separator, an inlet conduit leading to the centrifugal separator, a container for light phase, and a control arrangement. The centrifugal separator comprises a bowl being rotatable about a rotational axis, separation members arranged in a separation space delimited by a body of the bowl, an inlet passage leading into the separation space for the oil-containing aqueous liquid mixture, a light phase outlet passage from the separation space, and a heavy phase outlet passage from the separation space. The control arrangement comprises a sensor and a controllable light phase valve arrangement. The light phase valve arrangement is fluidly connected to the light phase outlet passage, a light phase conduit which is connected to the container for light phase, and to a return conduit which is connected to the inlet passage of the centrifugal separator. The control arrangement, during use of the separation system, is configured to:
- determine an oil concentration parameter of the light phase, and
   in response to the oil concentration parameter exceeding a threshold,
- control the light phase valve arrangement to conduct the light phase from the light phase outlet passage to the light phase conduit, and
   in response to the oil concentration parameter falling below the threshold,
- control the light phase valve arrangement to recirculate of the light phase from the light phase outlet passage to the return conduit.

Since in response to the determined oil concentration parameter, the light phase is either conducted to the container for light phase or is recirculated to the inlet passage of the centrifugal separator, operating conditions determine the destination of the separated light phase and thus, the method and/or the separation system avoid/s the filling of the container for light phase with water when the light phase contains mainly water. This is particularly advantageous when the oil content of the oil-containing aqueous liquid mixture varies within the range of 0 - 5% and accordingly, when there is a high risk of a large aqueous portion in the light phase.

In the separator the radial level of the oil and water interface may vary, which might lead to the heavy phase outlet passage containing excessive amount of oil. This may especially be a problem when an oil-containing aqueous liquid mixture contains oil with a high density, such as a density being higher than 980 kg/m³ at 15 °C. The invention may decrease that risk by providing a separator having a large enough light phase flow always containing water. If the light phase mostly contains water, the light phase may be returned to the inlet or to a feed tank. If the light phase contains a higher amount of oil, the light phase may be conducted to a slop tank.

In its broadest sense, the method and/or the separation system are/is configured for continuously separating any oil-containing aqueous liquid mixture having a low concentration of oil. In particular, the concentration of oil in the oil-containing aqueous liquid mixture may vary over time. One example of an application of the method and/or the separation system are/is the treatment of bilgewater aboard a ship, which over time may have a varying oil content between 0 - 5 % or 0 - 2% or 0 - 0,5 %. Alternative applications of the method and/or the separation system are/is the treatment of deck drains e.g. aboard ships or offshore platforms and in the deoiling of produced water in the field of crude oil production

When the method is applied i.e., during operation of the separation system, an oil content of the liquid mixture may vary within the range of 0 - 5%.

It may be noted that in practical operation, the oil content of the liquid mixture may vary and reach levels higher and even considerably higher than 5%. Under such high oil content conditions there is no risk that the separated light phase would contain mainly water. The present invention is again applied when the oil content of the liquid mixture has dropped to ≤ 5%.

The percentage may be volume-%. The term "oil content" relates to the amount of oil contained, such as in the liquid mixture, the light phase, and heavy phase, such as the proportion or concentration of oil. The corresponding applies for the term "water content" concerning the amount of water.

The centrifugal separator is configured for separating the oil-containing aqueous liquid mixture into the aqueous heavy phase and the light phase. The oil-containing aqueous liquid mixture is the feed to the centrifugal separator and may herein alternatively be referred to simply as the liquid mixture. The liquid mixture also may contain solid and/or liquid particles.

The separated aqueous heavy phase mainly contains water. Only small amounts of oil may remain in the heavy phase such as < 0.1% or < 50 ppm or < 15 ppm. In the case of bilgewater treatment, the heavy phase has to contain < 15 ppm if the separated heavy phase i.e., water is to be disposed of overboard a relevant ship. Even stricter requirements, such as ≤ 5 ppm may be applied in some regions.

The light phase may contain oil and/or water. Depending on the oil content of the liquid mixture, the oil content of the light phase may vary.

The threshold of the oil concentration parameter determines the level, at which the light phase is deemed to contain sufficiently low amounts of water to be conducted to the container for light phase. The threshold of the oil concentration parameter may depend on the liquid mixture to be separated. In some applications, such as bilgewater cleaning, the threshold may be 25% or 50% oil content. In other applications, the threshold may be higher, such as for instance, 75% oil or 90% oil content.

The oil concentration parameter may relate directly to the oil content of the light phase. Alternatively, the oil concentration parameter may relate indirectly to the oil content of the light phase.

The oil concentration parameter may be determined e.g., by measuring an amount of oil in the light phase or by measuring an amount of water in the light phase or by measuring any suitable indirect parameter such as e.g., water content, conductivity or transparency or density of the light phase. Determining the oil concentration parameter may include calculations related to measured data.

Also a sludge phase may be separated in the centrifugal separator. Such a sludge phase may contain water with solid and/or liquid particles heavier than water suspended therein. The sludge phase is separated in a peripheral portion of the separation space and may be discharged from the separation space in a known manner e.g., via intermittently openable discharge ports.

The separation is performed in the separation space of the centrifugal separator. The separation space comprises separation members, which may be discs that are radially or axially arranged around a rotational axis. The separation discs may for instance, comprise a stack of frustoconical separation discs.

The liquid mixture is led into the separation space along the rotational axis. The separated light phase is led out of the separation space along the rotational axis or radially close to the rotational axis. The separated heavy phase may be led out of the separation space along the rotational axis or radially close to the rotational axis. According to some embodiments, a sludge phase may be separated from the liquid mixture and may be ejected from a radially outer periphery of the bowl.

The bowl may be rotated at several thousand rotations per minute, such as at 3000 - 12000 rpm, during use of the centrifugal separator. Accordingly, the centrifugal separator may be a high-speed centrifugal separator.

The bowl may be arranged inside a stationary housing of the centrifugal separator. The bowl may be driven to rotate about a vertical axis of rotation by a drive arrangement comprising e.g., an electric motor.

Herein, axial, radial, circumferential, and rotational directions are defined in relation to the rotational axis. An axial direction extends in parallel with the rotational axis of the bowl and a radial direction extends perpendicularly to the rotational axis. Circumferential and rotational directions extend around the rotational axis.

The flow of light phase from the centrifugal separator via the light phase outlet passage may differ between the step of conducting the light phase from the light phase outlet passage to the container for light phase and the step of recirculating the light phase from the light phase outlet passage to the inlet passage of the centrifugal separator. For instance, during the step of conducting the light phase to the container for light phase, the flow of light phase may be larger than during the step of recirculating to the inlet passage.

A flow of light phase during the step of recirculating may be of a magnitude sufficient to perform the step of determining the oil content of the light phase. That is, the flow may have a quantity sufficient to enable the sensor of the control arrangement to reliably sense a parameter related to the oil content of the light phase. A suitable flow depends on the particular sensor used. Generally however, too low a flow may produce unreliable measurements and too high a flow may reduce the capacity of the separation system.

According to embodiments of the method, the step of recirculating the light phase may comprise a step of: conducting the light phase to the tank. In this manner, light phase with an oil concentration below the threshold may be directed to the tank and into the liquid mixture therein in order to be fed therefrom again to the inlet passage of the centrifugal separator. The recirculated light phase may be mixed with the liquid mixture in the tank and/or held in the tank for a time period before being fed to the inlet passage.

Correspondingly, for the separation system, the return conduit may be connected to the tank for the oil-containing aqueous liquid mixture.

According to embodiments of the method, the step of recirculating the light phase may comprise a step of: conducting the light phase directly to the inlet conduit. In this manner, the light phase with an oil concentration below the threshold may be mixed with the liquid mixture fed from the tank directly in the inlet conduit without being held in the tank.

Correspondingly, for the separation system, the return conduit may be directly connected to the inlet conduit.

The control arrangement may comprise a heavy phase valve arrangement connected to the heavy phase outlet passage. According to embodiments of the method, it may comprise a step of: recirculating of the aqueous heavy phase via the heavy phase valve arrangement from the heavy phase outlet passage to the tank. In this manner, the aqueous heavy phase may be returned to the tank upstream of the inlet passage of the centrifugal separator if the oil content of the aqueous heavy phase would be above a desired or required level. Thus, it may be ensured that the separation system does not produce aqueous heavy phase with too high an oil content.

The control arrangement of the separation system may comprise an Oil Content Meter, OCM, upstream of the heavy phase valve arrangement. Thus, oil content of the aqueous heavy phase may be measured in order to control the heavy phase valve arrangement.

According to embodiments, the separation members may comprise a stack of separation discs, wherein the separation discs are provided with distribution holes, and wherein the distribution holes are arranged at a radially inner half of the separation discs. In this manner, the centrifugal separator may be configured as a concentrator and thus, arranged particularly for the separation of a low oil content aqueous liquid mixture.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 schematically illustrates a cross section through a centrifugal separator according to embodiments,
Figs. 2a and 2b schematically illustrate example embodiments of separation systems,
Fig. 3 illustrates a control arrangement according to embodiments, and
Fig. 4 illustrates a method according to embodiments.

### DETAILED DESCRIPTION

Aspects and/or embodiments of the invention will now be described more fully. Like numbers refer to like elements throughout. Well-known functions or constructions will not necessarily be described in detail for brevity and/or clarity.

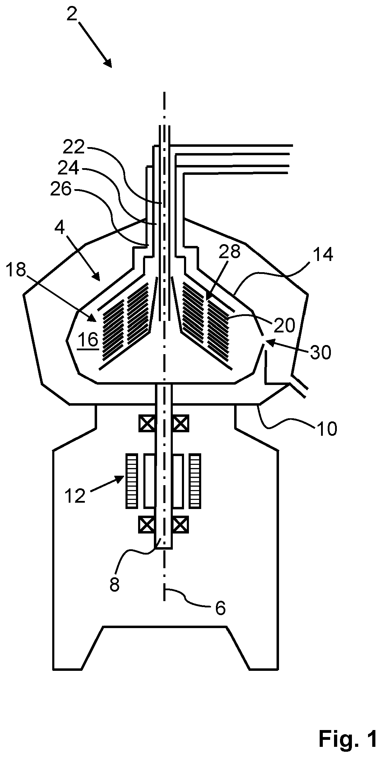

Fig. 1 schematically illustrates a cross section through a centrifugal separator 2 according to embodiments. The centrifugal separator 2 may form part of a separation system according to aspects and/or embodiments discussed herein. The centrifugal separator 2 may be utilised in aspects and/or embodiments of a method for separating an oil-containing aqueous liquid mixture discussed herein.

The centrifugal separator 2 comprises a bowl 4. The bowl 4 is rotatable about a rotational axis 6. The bowl 4 is suspended on a spindle 8. The spindle 8 forms part of a drive arrangement for rotating the bowl 4 about the rotational axis 6. The spindle 8 is supported in a housing 10 of the centrifugal separator 2 e.g., via two or more bearings. The housing 10 may comprise more than one individual part and accordingly, may be assembled from several parts.

In these embodiments, an electric motor 12 of the drive arrangement includes part of the spindle 8. That is, the spindle 8 and the bowl 4 are directly driven by the electric motor 12. In alternative embodiments, the drive arrangement may instead comprise an electric motor connected to the spindle via a transmission comprising e.g., cog wheels, or a belt drive.

A body 14 of the bowl 4 delimits a separation space 16 therein. Inside the separation space 16, continuous centrifugal separation of a liquid mixture takes place during operation of the centrifugal separator 2. Inside the separation space 16 there is arranged separation members 18. In the illustrated embodiments, the separation members comprise a stack of frustoconical separation discs 20. The stack of frustoconical separation discs 20 is fitted centrally and coaxially with the rotation axis 6 and rotates together with the bowl 4.

The separation members 18 provide for an efficient separation of the liquid mixture, in the present case an oil-containing aqueous liquid mixture into a light phase and an aqueous heavy phase.

The centrifugal separator 2 comprises an inlet passage 22 for the liquid mixture, a light phase outlet passage 24 for the light phase, and a heavy phase outlet passage 26 for the aqueous heavy phase. The inlet passage 22 leads into the separation space 16. The light phase outlet passage 24 leads from the separation space 16 and also the heavy phase outlet passage 26 leads from the separation space 16.

In the illustrated embodiments, during operation of the centrifugal separator 2, the liquid mixture to be separated is fed via the inlet passage 22 from above centrally into the bowl 4, wherefrom it is distributed into the separation space 16. The separated light phase is lead from a radially innermost portion of the separation space 16 upwardly via the light phase outlet passage 24. The separated aqueous heavy phase is lead from a portion of the separation space 16 radially outside the innermost portion of the separation space 16, such as a peripheral portion or a close to peripheral portion of the separation space 16, upwardly via the heavy phase outlet passage 26.

Centrifugal separators of this kind are known and come in a number of different types and sizes. The present invention is generally applicable to different types and sizes of centrifugal separators of this kind. The present invention is not limited to the type and arrangement of the inlet passage, the light phase outlet passage, and the heavy phase outlet passage. The inlet passage and the outlet passages may be e.g., open and/or mechanically hermetically sealed and/or provided with parring discs. They may be provided at an upper end of the bowl as illustrated in Fig. 1. Alternatively, one or more of them may be provided at a lower end of the bowl e.g., via the spindle.

To mention a few examples: The inlet passage 22 may be mechanically hermetically sealed between the bowl 4 and a stationary portion of the centrifugal separator 2. The light phase outlet passage 24 may be mechanically hermetically sealed between the bowl 4 and a stationary portion of the centrifugal separator 2. The heavy phase outlet passage 26 may be mechanically hermetically sealed between the bowl 4 and a stationary portion of the centrifugal separator 2. A mechanical hermetical seal comprises two sealing members, one arranged connected to the rotatable bowl 4 to rotate with it and one arranged stationary with the relevant stationary portion. The two sealing members are arranged in sealing abutment with each other in order to provide the seal between the rotating bowl 4 and the stationary portion during operation of the centrifugal separator. As an alternative to the heavy phase outlet passage 26 being mechanically hermetically sealed, the heavy phase outlet passage 26 may comprise a paring disc connected to the stationary portion and being arranged in a heavy phase paring chamber of the bowl 4. As an alternative to the light phase outlet passage 24 being mechanically hermetically sealed, the light phase outlet passage 24 may comprise a paring disc connected to the stationary portion and being arranged in a light phase paring chamber of the bowl 4. As an alternative to the mechanically hermetically sealed inlet passage 22, the inlet passage 22 may be open and optionally, the inlet passage 22 may be provided with a so called hydrohermetic inlet formed by horizontally arranged weir/weirs and/or flange/flanges.

As mentioned above, the separation members 18 may comprise a stack of separation discs 20. The separation discs 20 may be provided with distribution holes 28, which form substantially vertically extending distribution channels through the stack of separation discs 20. Through the distribution channels at least a portion of the liquid mixture fed into the separation space 16 is distributed within the stack of separation discs 20. The distribution holes 20 may be arranged at a radially inner half of the separation discs 20. In this manner, the centrifugal separator 2 may be configured as a concentrator and may be particularly devised for the separation of an oil-containing light phase from a low oil content aqueous liquid mixture, such as a mixture having an oil content of ≤ 5%.

The distribution holes 28 may be circular or oval. The number of distribution channels may be within a range of 4 - 12 distribution channels.

According to some embodiments, the distribution holes may be elongated in a radial direction. Thus, the stack of separation discs and the distribution channels may be devised for good separation of liquid mixtures having a varying oil content also at levels high above 5%. In such embodiments, the elongated distribution holes may also extend in the radially outer half of the separation discs.

The liquid mixture may comprise solid and or liquid particles heavier than water, which particles may be separated from the liquid mixture as part of a sludge phase.

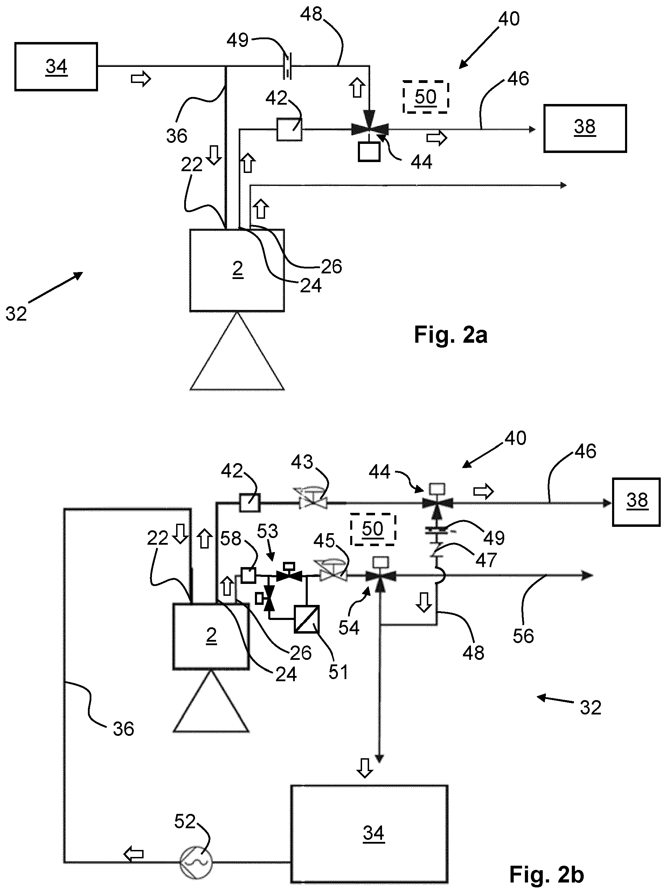

According to some embodiments, the centrifugal separator 2 may comprise a sludge outlet passage 30 arranged at a radially outer periphery of the bowl 4. A control arrangement, see below with reference to **Figs. 2a - 2b** and the description of the separation system, may be configured to intermittently open the sludge outlet passage 30 for ejection of a separated sludge phase therethrough.

In **Fig. 1** only one sludge outlet passage 30 is shown. The bowl 4 may comprise further sludge outlet passages 30.

**Figs. 2a and 2b** schematically illustrate example embodiments of separation systems 32. Flow directions in passages and conduits are indicated with arrows.

Referring to both **Figs. 2a and 2b****,** the separation system 32 is configured for separating an oil-containing aqueous liquid mixture having an oil content of ≤ 5% into an aqueous heavy phase and a light phase. The separation system 32 comprises a tank 34 for the oil-containing aqueous liquid mixture, a centrifugal separator 2, an inlet conduit 36 leading to the centrifugal separator 2, a container 38 for light phase, and a control arrangement 40. The inlet conduit 36 is arranged downstream of the tank 34.

The centrifugal separator 2 may be a centrifugal separator 2 as discussed above with reference to **Fig. 1** and comprises a bowl being rotatable about a rotational axis, separation members arranged in a separation space delimited by a body of the bowl, an inlet passage 22 for the oil-containing aqueous liquid mixture leading into the separation space, a light phase outlet passage 24 from the separation space, and a heavy phase outlet passage 26 from the separation space.

The control arrangement 40 comprises a sensor 42 and a controllable light phase valve arrangement 44. Accordingly, the separation system 32 comprises a controllable light phase valve arrangement 44.

The light phase valve arrangement 44 is fluidly connected to the light phase outlet passage 24, to a light phase conduit 46 which is connected to the container 38 for light phase, and to a return conduit 48, which is connected to the inlet passage 22 of the centrifugal separator 2. Accordingly, via the light phase valve arrangement 44, separated light phase from the light phase outlet passage 24 may be directed to the container 38 for light phase or to the inlet passage 22.

The control arrangement 40, during use of the separation system 32, is configured to:
- Determine an oil concentration parameter of the light phase. Determining the oil concentration parameter may be performed at least in part by the sensor 42. A calculation unit 50 of the control arrangement may contribute in the determining of the oil concentration parameter.
- In response to the oil concentration parameter exceeding a threshold, control the light phase valve arrangement 44 to conduct the light phase from the light phase outlet passage 24 to the light phase conduit 46. Accordingly, when the light phase has an oil concentration above the threshold, the light phase is directed to the container 38 for light phase via the light phase conduit 46. The calculation unit 50 may regulate the light phase valve arrangement 44.
- In response to the oil concentration parameter falling below the threshold, control the light phase valve arrangement 44 to recirculate the light phase from the light phase outlet passage 24 to the return conduit 48. Accordingly, when the light phase has an oil concentration below the threshold, the light phase is directed to the inlet passage 22 of the centrifugal separator 2 via the return conduit 48. Again, the calculation unit 50 may regulate the light phase valve arrangement 44.

Thus, it is ensured that the light phase has a certain oil concentration for it to be directed to the container for light phase. Accordingly, unnecessary directing of the aqueous portion of the liquid mixture to the container 38 for light phase is avoided. A level of the threshold may be set in the control system to control the amount of the aqueous portion to be directed to the container 38 for light phase.

The sensor 42 may comprise one or more of a conductivity sensor, a capacitance (dielectric) sensor, an acoustic sensor, or any other suitable sensor able to contribute in the determining of an oil content in the separated light phase.

The return conduit 48 may be provided with a flow restriction e.g., a specific flow restricting element 49 or at least a portion of the return conduit 48 has a small diameter in order to maintain a flow suitable for the sensor 42 and the calculation unit 50 to establish the oil concentration parameter and perform the comparison with the threshold of the oil concentration parameter. A larger flow of light phase than required for this purpose, may recirculate unnecessarily large amounts of light phase to the inlet passage 22.

Accordingly, the flow of light phase from the centrifugal separator 2 via the light phase outlet passage 24 may differ depending on whether the separated light phase is to be directed to the container 38 for light phase or recirculated to the inlet passage 22. A larger flow of the light phase through the light phase conduit 46 and to the container 38 for light phase than through the return conduit 48 may be beneficial in order to ensure that separated light phase with an oil content above the threshold is readily conducted to the container 38 for light phase.

In the illustrated embodiments, the light phase valve arrangement 44 comprises a controllable three-way valve. Alternatively, the light phase valve arrangement 44 may comprise e.g., two controllable two-valves, one each arranged in the light phase conduit 46 and the return conduit 48.

According to the invention, the oil-containing aqueous liquid mixture is bilgewater.

According thereto, the tank 34 for oil may be a bilgewater tank aboard a ship, in which bilgewater of the ship is collected and from which the bilgewater is fed to the centrifugal separator 2 for removal of oil and optionally for removal of sludge. The container 38 for light phase may be a slop oil tank.

In the embodiments of **Fig. 2a****,** the return conduit 48 is directly connected to the inlet conduit 36. That is, during operation of the separation system 32, when the oil concentration parameter is below the threshold, the light phase is recirculated directly to the inlet conduit 36 and the inlet passage 22 via the return conduit 48. In the inlet conduit 36, the recirculated light phase is added to the liquid mixture fed from the tank 34.

In the embodiments of **Fig. 2b****,** the return conduit 48 is connected to the tank 34 for the oil-containing aqueous liquid mixture. That is, during operation of the separation system 32, when the oil concentration parameter is below the threshold, the light phase is recirculated to the tank 34. In the tank the light phase is blended with the liquid mixture and as such a blend, is fed via the inlet conduit 36 to the inlet passage 22.

The following features are discussed with reference to **Fig. 2b** but one or more of them may also be implemented in **Fig. 2a** embodiments.

The separation system 32 may comprise a pump 52 for pumping the oil-containing aqueous liquid mixture from the tank 34 to the inlet passage 22 of the centrifugal separator 2.

Downstream of one or both of the light phase and heavy phase passages 24, 26 the control arrangement 40 may comprise constant pressure valves 43, 45 in order to provide backpressure suitable for the operation of the centrifugal separator 2, e.g., for a centrifugal separator with mechanically hermetically sealed outlet passages 24, 26 constant pressure valves 43, 45 are a necessity. The constant pressure valves 43, 45 may be controlled by the calculation unit 50.

The control arrangement 40 and accordingly, the separation system 32 may comprise a heavy phase valve arrangement 54 connected to the heavy phase outlet passage 26. The heavy phase valve arrangement 54 is configured to direct the heavy phase separated in the centrifugal separator 2 either back to the tank 34 or to a heavy phase conduit 56 away from the separation system 32.

The control arrangement 40 upstream of the heavy phase valve arrangement 54 may comprise an OCM or other suitable sensor 58. The OCM/sensor 58 determines the oil content of the aqueous heavy phase separated in the centrifugal separator 2, the calculation unit 50 may also be utilised in this determining. The determined oil content is utilised for controlling the heavy phase valve arrangement 54.

Thus, the aqueous heavy phase may be recirculated via the heavy phase valve arrangement 54 from the heavy phase outlet passage 26 to the tank 34 if an oil content of the aqueous heavy phase is too high to be conducted from the system 32. The aqueous heavy phase is mixed in the tank 34 with the liquid mixture and eventually fed to the inlet passage 22 of the centrifugal separator 2.

In the illustrated embodiments, the heavy phase valve arrangement 54 comprises a controllable three-way valve. Alternatively, the heavy phase valve arrangement 54 may comprise e.g., two controllable two-valves, one each arranged in the heavy phase conduit 46 and the return conduit 48.

In the illustrated embodiments, the heavy phase valve arrangement 54 is connected to the return conduit 48 for light phase. In such embodiments, a check valve 47 may be provided in the return conduit 48 to prevent heavy phase from mixing with separated light phase. As an alternative, the heavy phase valve arrangement 54 may be connected to a separate conduit leading to the tank 34.

In embodiments, wherein the centrifugal separator 2 comprises sludge outlet passages 30, as indicated in **Fig. 1****,** the control arrangement 40 may be configured to control ejection of separated sludge phase via the sludge outlet passages.

The separation system 32 may comprise an oil filter 51 and a further valve arrangement 53 configured for directing the separated heavy phase either through the oil filter 51 or for bypassing the oil filter 51. The oil filter 51 may be a membrane filter or any other suitable filter for reducing/removing small remaining amounts of oil from the aqueous heavy phase. For instance, the oil filter 51 may be utilised for reducing the oil content of the heavy phase e.g., from 15 ppm to ≤ 5 ppm, as required for disposal of water overboard a ship in certain regions.

The further valve arrangement 53 may be controlled by the calculation unit 50 and/or by the OCM 58. In the illustrated embodiments, the further valve arrangement 53 comprises two two-way valves. Alternatively, the further valve arrangement 53 may comprise a three-way valve.

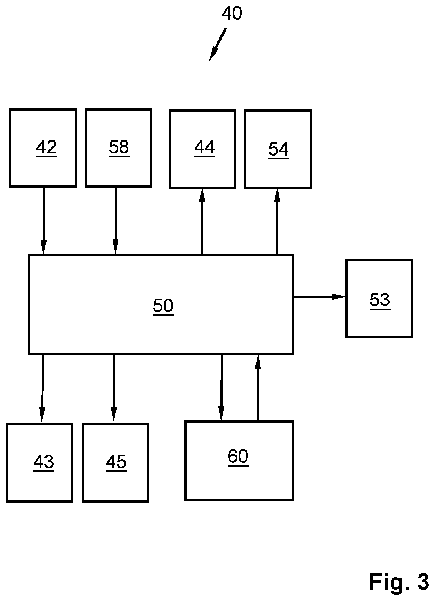

**Fig. 3** illustrates a control arrangement 40 according to embodiments. The control arrangement 40 is configured to be utilised in connection with different aspects and/or embodiments of the invention. The control arrangement 40 is also indicated in **Figs. 1 - 2b****.**

The control arrangement 40 comprises a calculation unit 50 which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression calculation unit may represent a processing circuitry comprising a plurality of processing circuits, such as, e.g., any, some or all of the ones mentioned above. The control arrangement 40 may comprise a memory unit 60. The calculation unit 50 is connected to the memory unit 60, which provides the calculation unit 50 with, for example, stored programme code and/or stored data which the calculation unit 50 needs to enable it to do calculations. The calculation unit 50 may also be adapted to storing partial or final results of calculations in the memory unit 60. The memory unit 60 may comprise a physical device utilised to store data or programs, i.e., sequences of instructions, on a temporary or permanent basis.

The control arrangement 40 further comprises one or more sensors and/or meters 42, 58 and one or more controllable valves 43, 44, 45, 53, 54. The control arrangement 40 communicates with the one or more sensors and/or meters and the one or more controllable valves via one or more from among a cable, a data bus, e.g. a CAN (controller area network) bus, a MOST (media orientated systems transport) bus or some other bus configuration, or a wireless connection. In the embodiment depicted, only one calculation unit 50 and memory 60 are shown, but the control arrangement 40 may alternatively comprise more than one calculation unit and/or memory.

The sensor may be a sensor 42 providing data for determining an oil concentration parameter and/or the oil content of the light phase and the meter may be an Oil Content Meter 58. The controllable valves may form part of a controllable light phase valve arrangement 44 and of a controllable heavy phase valve arrangement 54.

The calculation unit 50 may be configured to determine an oil concentration parameter and/or an oil content of the separated light phase based on data from the sensor 42. The calculation unit 50 may be configured to determine an oil content of the heavy phase or receive an oil content figure based on data from the Oil Content Meter 58. The calculation unit 50 may be configured to compare an oil concentration parameter and/or an oil content figure with a threshold value.

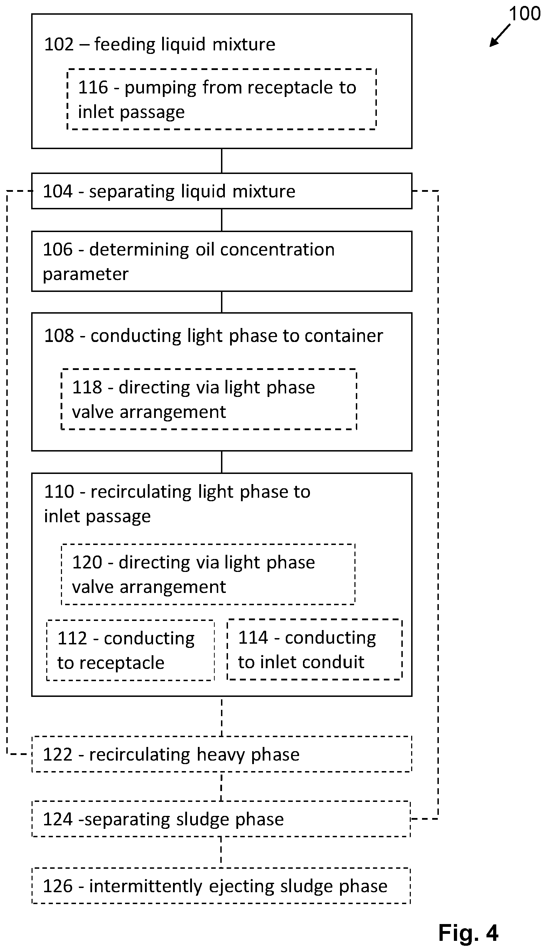

The control arrangement 40 may be configured to perform a method 100 according to any one of aspects and/or embodiments discussed herein, see e.g. below with reference to Fig. **4****.**

**Fig. 4** illustrates embodiments of a method 100 for separating an oil-containing aqueous liquid mixture. Execution of the method 100 may be controlled by a control arrangement 40 as discussed above with reference to **Fig. 3****.** In the following, reference is also made to **Figs. 1 - 3**.

The method 100 applies for separating an oil-containing aqueous liquid mixture having an oil content of ≤ 5% into an aqueous heavy phase and a light phase in a separation system. The separation system may be a separation system 32 as discussed above with reference to **Figs. 2a and 2b****.** Accordingly, the separation system 32 comprises a tank 34 for the oil-containing aqueous liquid mixture, a centrifugal separator 2, an inlet conduit 36 leading to the centrifugal separator 2, and a container 38 for light phase. The centrifugal separator may be a centrifugal separator 2 as discussed above with reference to **Figs. 1** - **2b****.** Accordingly, the centrifugal separator 2 comprises an inlet passage 22 for the oil-containing aqueous liquid mixture connected to the inlet conduit 36, a light phase outlet passage 24, and a heavy phase outlet passage 26.

The method 100 comprises steps of:
- feeding 102 the oil-containing aqueous liquid mixture from the tank via the inlet conduit 36 to the inlet passage 22 of the centrifugal separator 2,
- separating 104 the oil-containing aqueous liquid mixture into the aqueous heavy phase and the light phase in the centrifugal separator 2,
- determining 106 an oil concentration parameter of the light phase, and
   in response to the oil concentration parameter exceeding a threshold,

- conducting 108 the light phase from the light phase outlet passage 24 to the container 38 for light phase, and
   in response to the oil concentration parameter falling below the threshold,
- recirculating 110 the light phase from the light phase outlet passage 24 to the inlet passage 22 of the centrifugal separator 2. Thus, operating conditions determine the destination of the separated light phase and filling of the container 38 for light phase with water when the light phase contains mainly water is avoided.

The oil concentration parameter of the light phase is a current value of the oil content of the light phase.

The step of recirculating 110 the light phase may comprise a step of: conducting 112 the light phase to the tank 34, see also Fig. 2b. In this manner, when the separated light phase has a high water content, it may be directed to the tank 34 and it may be fed therefrom again to the inlet passage 22.

Alternatively, the step of recirculating 110 the light phase may comprise a step of: conducting 114 the light phase directly to the inlet conduit 36, see also Fig. 2a. In this manner, when the separated light phase has a high water content, it may be mixed in the inlet conduit 36 with the liquid mixture fed from the tank 34.

The oil-containing aqueous liquid mixture is bilgewater.

According to embodiments, in the step of separating 104 the oil-containing aqueous liquid mixture into the aqueous heavy phase and the light phase, the aqueous heavy phase may have an oil content of < 15 ppm. In this manner, the method 100 may be adapted for the separation of an aqueous heavy phase from bilgewater, which aqueous heavy phase is adapted for disposing of overboard a ship.

According to embodiments, the step of conducting 102 may comprise a step of:
- pumping 116 the oil-containing aqueous liquid mixture from the tank 34 to the inlet passage 22 of the centrifugal separator 2. In this manner, the liquid mixture may be transferred from the tank 34 to the centrifugal separator 2.

As discussed above, the separation system 32 may comprise a light phase valve arrangement 44 connected to the light phase outlet passage 24. According to embodiments of the method 100, the step of conducting 108 the light phase may comprise a step of:
- directing 118 the light phase via the light phase valve arrangement 44 to the container 38 for light phase, and the step of recirculating 110 of the light phase may comprise a step of:
- directing 120 the light phase via the light phase valve arrangement 44 to the inlet passage 22 of the centrifugal separator 2. In this manner, the flow of separated light phase may be conveniently directed.

The separation system 32 may comprise a heavy phase valve arrangement 54 connected to the heavy phase outlet passage 26. According to embodiments, the method 100 may comprise a step of:
- recirculating 122 the aqueous heavy phase via the heavy phase valve arrangement 54 from the heavy phase outlet passage 26 to the tank 34. In this manner, the aqueous heavy phase may be returned to the tank 34 if the oil content of the aqueous heavy phase would be above a desired or required level.

The step of recirculating 122 the aqueous heavy phase may be preceded by a step of determining an oil content of the separated aqueous heavy phase e.g., in a manner as discussed above with reference to **Fig. 2b****.**

As discussed above, the centrifugal separator 2 may comprise a sludge outlet passage 30 arranged at a periphery of a separation space 16 of a bowl 4 of the centrifugal separator 2. The method 100 may comprise steps of:
- separating 124 a sludge phase from the oil-containing aqueous liquid mixture, and
- intermittently ejecting 126 the sludge phase via the sludge outlet passage 30. In this manner, the oil-containing aqueous liquid mixture may be relieved of a particle containing sludge phase.

According to a further aspect, there is provided a computer program comprising instructions which, when the program is executed by a computer, causes the computer to carry out a method 100 according to any one of aspects and/or embodiments discussed herein.

One skilled in the art will appreciate that the method 100 for separating an oil-containing aqueous liquid mixture having an oil content of ≤ 5% into an aqueous heavy phase and a light phase in a separation system 32 may be implemented by programmed instructions in the control arrangement 40 of the separation system 32. These programmed instructions are typically constituted by a computer program, which, when it is executed in a computer or calculation unit 50, ensures that the computer or calculation unit 50 carries out the desired control, such as the method steps 102 - 126 according to the invention. The computer program is usually part of a computer-readable storage medium which comprises a suitable digital storage medium on which the computer program is stored.

It is to be understood that the foregoing is illustrative of various example embodiments and that the invention is defined only by the appended claims.

## Claims

1. A method (100) for continuously separating an oil-containing aqueous liquid mixture being bilgewater having an oil content of ≤ 5% into an aqueous heavy phase and a light phase in a separation system (32) comprising a tank (34) for the oil-containing aqueous liquid mixture, a centrifugal separator (2), an inlet conduit (36) leading to the centrifugal separator (2), and a container (38) for light phase, wherein
the centrifugal separator (2) comprises a bowl (4) being rotatable about a rotational axis (6), a plurality of separation members (18) arranged in a separation space (16) delimited by a body (14) of the bowl (4), an inlet passage (22) for the oil-containing aqueous liquid mixture connected to the inlet conduit (36), a light phase outlet passage (24), and a heavy phase outlet passage (26), and wherein
the method (100) comprises steps of:
- conducting (102) the oil-containing aqueous liquid mixture from the tank (34) via the inlet conduit (36) to the inlet passage (22) of the centrifugal separator (2),
- separating (104) the oil-containing aqueous liquid mixture into the aqueous heavy phase and the light phase in the centrifugal separator (2),
- determining (106) an oil concentration parameter of the light phase, and
in response to the oil concentration parameter exceeding a threshold,
- conducting (108) the light phase from the light phase outlet passage (24) to the container (38) for light phase,
in response to the oil concentration parameter falling below the threshold,
- recirculating (110) of the light phase from the light phase outlet passage (24) to the inlet passage (22) of the centrifugal separator (2), and
wherein the step of recirculating (110) of the light phase comprises either a step of conducting (112) the light phase to the tank (34) or a step of conducting (114) the light phase directly to the inlet conduit (36).

2. The method (100) for separating according to claim 1, wherein in the step of separating (104) the oil-containing aqueous liquid mixture into the aqueous heavy phase and the light phase, the aqueous heavy phase has an oil content of ≤ 15 ppm.

3. The method (100) for separating according to any one of the preceding claims, wherein the step of conducting (102) comprises a step of:
- pumping (116) the oil-containing aqueous liquid mixture from the tank (34) to the inlet passage (22) of the centrifugal separator (2).

4. The method (100) for separating according to any one of the preceding claims, wherein the separation system (32) comprises a light phase valve arrangement (44) connected to the light phase outlet passage (24), wherein the step of conducting (108) the light phase comprises a step of:
- directing (118) the light phase via the light phase valve arrangement (44) to the container (38) for light phase, and wherein the step of recirculating (110) of the light phase comprises a step of:
- directing (120) the light phase via the light phase valve arrangement (44) to the inlet passage (22) of the centrifugal separator (2).

5. The method (100) for separating according to any one of the preceding claims, wherein the separation system (32) comprises a heavy phase valve arrangement (54) connected to the heavy phase outlet passage (26), wherein the method (100) comprises a step of:
- recirculating (122) the aqueous heavy phase via the heavy phase valve arrangement (54) from the heavy phase outlet passage (26) to the tank (34).

6. The method (100) for separating according to any one of the preceding claims, wherein the centrifugal separator (2) comprises a sludge outlet passage (30) arranged at a periphery of a separation space (16) of a bowl (4) of the centrifugal separator (2), and wherein
the method (100) comprises steps of:
- separating (124) a sludge phase from the oil-containing aqueous liquid mixture, and
- intermittently ejecting (126) the sludge phase via the sludge outlet passage (30).

## Patentansprüche

1. Verfahren (100) zum kontinuierlichen Trennen eines ölhaltigen wässerigen Flüssigkeitsgemisches, das Bilgenwasser ist, mit einem Ölgehalt von ≤ 5 % in eine wässerige schwere Phase und eine leichte Phase in einem Trennsystem (32), das einen Tank (34) für das ölhaltige wässerige Flüssigkeitsgemisch, einen Zentrifugalseparator (2), eine Einlassleitung (36), die zu dem Zentrifugalseparator (2) führt, und einen Behälter (38) für die leichte Phase umfasst, wobei
der Zentrifugalseparator (2) eine Trommel (4), die um eine Drehachse (6) drehbar ist, eine Vielzahl von Trenngliedern (18), die in einem Trennraum (16), der durch einen Körper (14) der Trommel (4) begrenzt ist, angeordnet sind, einen Einlasskanal (22) für das ölhaltige wässerige Flüssigkeitsgemisch, der mit der Einlassleitung (36) verbunden ist, einen Auslasskanal für die leichte Phase (24) und einen Auslasskanal für die schwere Phase (26) umfasst, und wobei
das Verfahren (100) die folgenden Schritte umfasst:
- Leiten (102) des ölhaltigen wässerigen Flüssigkeitsgemisches aus dem Tank (34) über die Einlassleitung (36) zu dem Einlasskanal (22) des Zentrifugalseparators (2),
- Trennen (104) des ölhaltigen wässerigen Flüssigkeitsgemisches in die wässerige schwere Phase und die leichte Phase in dem Zentrifugalseparator (2),
- Bestimmen (106) eines Ölkonzentrationsparameters der leichten Phase, und
als Reaktion darauf, dass der Ölkonzentrationsparameter einen Schwellenwert übersteigt,
- Leiten (108) der leichten Phase aus dem Auslasskanal für die leichte Phase (24) zu dem Behälter (38) für die leichte Phase,
als Reaktion darauf, dass der Ölkonzentrationsparameter unter den Schwellenwert fällt:
- Zurückführen (110) der leichten Phase aus dem Auslasskanal für die leichte Phase (24) zu dem Einlasskanal (22) des Zentrifugalseparators (2), und
wobei der Schritt des Zurückführens (110) der leichten Phase entweder einen Schritt des Leitens (112) der leichten Phase zu dem Tank (34) oder einen Schritt des Leitens (114) der leichten Phase direkt zu der Einlassleitung (36) umfasst.

2. Verfahren (100) zum Trennen nach Anspruch 1, wobei in dem Schritt des Trennens (104) des ölhaltigen wässerigen Flüssigkeitsgemisches in die wässerige schwere Phase und die leichte Phase die wässerige schwere Phase einen Ölgehalt von ≤ 15 ppm aufweist.

3. Verfahren (100) zum Trennen nach einem der vorhergehenden Ansprüche, wobei der Schritt des Leitens (102) einen folgenden Schritt umfasst:
- Pumpen (116) des ölhaltigen wässerigen Flüssigkeitsgemisches aus dem Tank (34) zu dem Einlasskanal (22) des Zentrifugalseparators (2).

4. Verfahren (100) zum Trennen nach einem der vorhergehenden Ansprüche, wobei das Trennsystem (32) eine Ventilanordnung für die leichte Phase (44), die mit dem Auslasskanal für die leichte Phase (24) verbunden ist, umfasst, wobei der Schritt des Leitens (108) der leichten Phase einen folgenden Schritt umfasst:
- Lenken (118) der leichten Phase über die Ventilanordnung für die leichte Phase (44) zu dem Behälter (38) für die leichte Phase, und wobei der Schritt des Zurückführens (110) der leichten Phase einen folgenden Schritt umfasst:
- Lenken (120) der leichten Phase über die Ventilanordnung für die leichte Phase (44) zu dem Einlasskanal (22) des Zentrifugalseparators (2).

5. Verfahren (100) zum Trennen nach einem der vorhergehenden Ansprüche, wobei das Trennsystem (32) eine Ventilanordnung für die schwere Phase (54), die mit dem Auslasskanal für die schwere Phase (26) verbunden ist, umfasst, wobei das Verfahren (100) einen folgenden Schritt umfasst:
- Zurückführen (122) der wässerigen schweren Phase über die Ventilanordnung für die schwere Phase (54) aus dem Auslasskanal für die schwere Phase (26) zu dem Tank (34).

6. Verfahren (100) zum Trennen nach einem der vorhergehenden Ansprüche, wobei der Zentrifugalseparator (2) einen Schlammauslasskanal (30), der an einer Peripherie eines Trennraums (16) einer Trommel (4) des Zentrifugalseparators (2) angeordnet ist, umfasst, und wobei
das Verfahren (100) die folgenden Schritte umfasst:
- Trennen (124) einer Schlammphase aus dem ölhaltigen wässerigen Flüssigkeitsgemisch, und
- intermittierendes Ausstoßen (126) der Schlammphase über den Schlammauslasskanal (30).

## Revendications

1. Procédé (100) de séparation continue d'un mélange liquide aqueux contenant de l'huile, étant des eaux de cale, ayant une teneur en huile de ≤ 5 % en une phase lourde aqueuse et une phase légère dans un système de séparation (32) comprenant une cuve (34) pour le mélange liquide aqueux contenant de l'huile, un séparateur centrifuge (2), un conduit d'entrée (36) conduisant au séparateur centrifuge (2), et un récipient (38) pour la phase légère, dans lequel
le séparateur centrifuge (2) comprend un bol (4) pouvant tourner autour d'un axe de rotation (6), une pluralité d'éléments de séparation (18) agencés dans un espace de séparation (16) délimité par un corps (14) du bol (4), un passage d'entrée (22) pour le mélange liquide aqueux contenant de l'huile raccordé au conduit d'entrée (36), un passage de sortie de phase légère (24), et un passage de sortie de phase lourde (26), et dans lequel
le procédé (100) comprend les étapes consistant à :
- conduire (102) le mélange liquide aqueux contenant de l'huile depuis la cuve (34) *via* le conduit d'entrée (36) au passage d'entrée (22) du séparateur centrifuge (2),
- séparer (104) le mélange liquide aqueux contenant de l'huile en la phase lourde aqueuse et la phase légère dans le séparateur centrifuge (2),
- déterminer (106) un paramètre de concentration d'huile de la phase légère,
et
en réponse au paramètre de concentration d'huile excédant un seuil,
- conduire (108) la phase légère depuis le passage de sortie de phase légère (24) vers le récipient (38) pour la phase légère,
en réponse au paramètre de concentration d'huile tombant en-dessous du seuil,
- remettre en circulation (110) la phase légère depuis le passage de sortie de phase légère (24) vers le passage d'entrée (22) du séparateur centrifuge (2), et
dans lequel l'étape de remise en circulation (110) de la phase légère comprend soit une étape de conduite (112) de la phase légère vers la cuve (34) soit une étape de conduite (114) de la phase légère directement vers le conduit d'entrée (36).

2. Procédé (100) de séparation selon la revendication 1, dans lequel dans l'étape de séparation (104) du mélange liquide aqueux contenant de l'huile en la phase lourde aqueuse et la phase légère, la phase lourde aqueuse présente une teneur en huile de ≤ 15 ppm.

3. Procédé (100) de séparation selon l'une quelconque des revendications précédentes, dans lequel l'étape de conduite (102) comprend une étape consistant à:
- pomper (116) le mélange liquide aqueux contenant de l'huile depuis la cuve (34) vers le passage d'entrée (22) du séparateur centrifuge (2).

4. Procédé (100) de séparation selon l'une quelconque des revendications précédentes, dans lequel le système de séparation (32) comprend un agencement de vanne de phase légère (44) raccordé au passage de sortie de phase légère (24), dans lequel l'étape de conduite (108) de la phase légère comprend une étape consistant à :
- diriger (118) la phase légère *via* l'agencement de vanne de phase légère (44) vers le récipient (38) pour la phase légère, et dans lequel l'étape de remise en circulation (110) de la phase légère comprend une étape consistant à :
- diriger (120) la phase légère *via* l'agencement de vanne de phase légère (44) vers le passage d'entrée (22) du séparateur centrifuge (2).

5. Procédé (100) de séparation selon l'une quelconque des revendications précédentes, dans lequel le système de séparation (32) comprend un agencement de vanne de phase lourde (54) raccordé au passage de sortie de phase lourde (26), dans lequel le procédé (100) comprend une étape consistant à :
- remettre en circulation (122) la phase lourde aqueuse *via* l'agencement de vanne de phase lourde (54) depuis le passage de sortie de phase lourde (26) vers la cuve (34).

6. Procédé (100) de séparation selon l'une quelconque des revendications précédentes, dans lequel le séparateur centrifuge (2) comprend un passage de sortie de boue (30) agencé au niveau d'une périphérie d'un espace de séparation (16) d'un bol (4) du séparateur centrifuge (2), et dans lequel
le procédé (100) comprend les étapes consistant à :
- séparer (124) une phase boue du mélange liquide aqueux contenant de l'huile, et
- éjecter (126) de manière intermittente la phase boue *via* le passage de sortie de boue (30).
